# DEMANDE DE BREVET EUROPEEN

(11) **EP 1 053 898 A1**
(43) Date de publication de la demande: **22.11.2000**
(21) Numéro de dépôt: 00460035.9
(22) Date de dépôt: 15.05.2000
(51) Int. Cl.: B60J 1/20

(54) **Store à enrouleur à bouchon de tube d'enroulement non coaxial**

(30) Priorité: 20.05.1999 FR 9906668
(71) Demandeur: WAGON AUTOMOTIVE SNC, 79302 Bressuire Cédex (FR)
(72) Inventeur: Coudon, Denise, 79300 Bressuire (FR)
(74) Mandataire: Vidon, Patrice

(57) **Abrégé**

L'invention concerne un store à enrouleur du type comprenant un rideau rétractable (11) dont l'un des bords est solidarisé à un tube d'enroulement rigide (13) monté à rotation sur des moyens fixes, ledit tube d'enroulement (13) étant relié auxdits moyens fixes par l'intermédiaire de deux bouchons d'extrémité (15, 16), présentant chacun une partie pénétrante à l'intérieur dudit tube (13) et une partie de solidarisation à un palier (14₁, 14₂) monté sur lesdits moyens fixes, ladite partie (151) pénétrant à l'intérieur du tube (13) d'au moins un desdits bouchons d'extrémité (15) est conçue de façon à autoriser l'existence d'un angle éventuellement non nul entre l'axe dudit bouchon (15) et l'axe dudit tube d'enroulement (13), sans nuire à la rotation de ce dernier.

## Description

Le domaine de l'invention est celui des stores d'occultation pour baie de véhicule. Plus précisément, l'invention concerne les stores rétractables à enrouleur, que l'utilisateur peut déployer en cas de besoin, par exemple pour se protéger du soleil.

De tels stores peuvent, classiquement, équiper les portières d'un véhicule, la lunette arrière, ou encore le pavillon, voire la partie haute du pare-brise.

Le store peut être monté dans un boîtier que l'on vient par exemple rapporter le long de la carrosserie, ou sur la vitre, à l'aide de ventouses. Il peut également être dissimulé à l'intérieur de la garniture intérieure d'une portière, du pavillon ou d'un cache-bagage. Dans ce cas, seule la barre de tirage reste apparente.

D'une façon générale, un store à enrouleur comprend un bâti fixe, qui peut donc être le boîtier, ou l'élément de structure de la carrosserie dans lequel il est monté (une portière par exemple). Un rouleau, ou tube, d'enroulement d'un écran, ou rideau, souple est monté à rotation autour d'un axe sur ce bâti fixe, à l'aide de paliers. Le rideau présente un bord attelé au tube d'enroulement, et un bord opposé, dit bord libre, attelé à la barre de tirage.

Cette barre de tirage s'étend sensiblement parallèlement à l'axe d'enroulement du rideau, défini par le tube d'enroulement, et est équipée de moyens d'accrochage à un élément de structure associé à la baie à occulter, permettant de maintenir le rideau en position déployée.

Le tube d'enroulement est généralement sollicité par un couple de rappel élastique permanent, s'opposant au déploiement de l'écran et tendant à ramener et maintenir la barre de tirage contre le tube d'enroulement. Ce dernier peut également être motorisé.

Pour assurer une rotation de bonne qualité (c'est-à-dire notamment silencieuse et sans blocage ni point dur), le tube d'enroulement est solidarisé à deux paliers montés sur le bâti fixe, par l'intermédiaire de deux bouchons d'extrémité. Ces bouchons comprennent une partie pénétrant à l'intérieur du tube, et une partie de solidarisation au bâti, prévue pour être montée dans l'un des paliers. Pour obtenir une bonne fixation du bouchon dans le tube, il est nécessaire que le bouchon pénètre sur une longueur relativement importante, classiquement 1 à 3 cm, à l'intérieur du tube.

Lorsque les deux paliers sont parfaitement alignés, cette technique s'avère parfaitement efficace. En revanche, dès qu'un décalage de cet alignement apparaît, la rotation est perturbée, ce qui entraîne un enroulement et un déroulement de mauvaise qualité, une usure des paliers, et le cas échéant, des blocages ou une casse d'une des pièces.

Il est donc nécessaire d'obtenir une coaxialité parfaite entre le tube, les deux bouchons et les paliers. On comprend cependant que cela n'est pas toujours aisé, notamment lorsque le bâti fixe fait partie d'un élément de structure de la carrosserie du véhicule, construit en grande série. On est alors conduit à accepter les défauts et les risques d'une mauvaise coaxialité, ou, le cas échéant, à prévoir des moyens de réglage de la position d'un des paliers.

L'invention a notamment pour objectif de pallier ces inconvénients de l'art antérieur.

Plus précisément, un objectif de l'invention est de fournir un store à enrouleur dont la rotation du tube d'enroulement est de bonne qualité, même lorsque les paliers le supportant ne sont pas parfaitement coaxiaux.

Un autre objectif de l'invention est de fournir un tel store à enrouleur, qui soit simple et peu coûteux à réaliser et à monter, sans nécessiter de réglage au cas par cas.

L'invention a également pour objectif de fournir un tel store à enrouleur, qui soit bien adapté à un montage dans un élément de structure de carrosserie d'un véhicule.

Ces objectifs, ainsi que d'autres qui apparaîtront plus clairement par la suite sont atteints à l'aide d'un store à enrouleur du type comprenant un rideau rétractable dont l'un des bords est solidarisé à un tube d'enroulement rigide monté à rotation sur des moyens fixes, ledit tube d'enroulement étant relié auxdits moyens fixes par l'intermédiaire de deux bouchons d'extrémité, présentant chacun une partie pénétrante à l'intérieur dudit tube et une partie de solidarisation à un palier monté sur lesdits moyens fixes.

Selon l'invention, ladite partie pénétrant à l'intérieur du tube d'au moins un desdits bouchons d'extrémité est conçue de façon à autoriser l'existence d'un angle éventuellement non nul entre l'axe dudit bouchon et l'axe dudit tube d'enroulement, sans nuire à la rotation de ce dernier.

En d'autres termes, l'un des bouchons d'extrémité du tube d'enroulement est conçu de façon à permettre un certain jeu, entre le tube et le palier correspondant. Il n'est donc ainsi plus obligatoire que les deux paliers soient parfaitement coaxiaux.

Selon un mode de réalisation préférentiel de l'invention, ladite partie pénétrant à l'intérieur du tube présente une portion au moins partiellement sphérique ou ovoïde, dont le diamètre maximum coïncide avec le diamètre intérieur dudit tube d'enroulement.

De façon préférentielle, un seul desdits bouchons d'extrémité est conçu de façon à autoriser l'existence d'un angle éventuellement non nul entre l'axe dudit bouchon et l'axe dudit tube d'enroulement. Dans ce cas, il s'agit avantageusement du bouchon d'extrémité monté du côté dudit tube opposé au mécanisme permettant l'enroulement dudit rideau.

Selon un premier mode de réalisation, ledit store lesdits moyens fixes sont solidaires de la carrosserie d'un véhicule. Ils peuvent par exemple être montés dans la garniture intérieure d'une portière.

Selon un second mode de réalisation, ledit store est monté dans un boîtier fixe prévu pour être solidarisé à la carrosserie ou à une vitre d'un véhicule.

Dans ce cas, ledit boîtier peut avantageusement présenter des éléments extérieurs visibles prévus pour venir en lieu et place d'une partie supérieure du panneau intérieur d'un élément de carrosserie d'un véhicule.

D'autres caractéristiques et avantages de l'invention apparaîtront plus clairement à la lecture de la description suivante d'un mode de réalisation préférentiel de l'invention, donné à titre de simple exemple illustratif et non limitatif, et des dessins annexés, parmi lesquels :
- la figure 1 illustre, en coupe, un exemple de store à enrouleur selon l'invention ;
- les figures 2 à 4 illustrent le bouchon selon l'invention du tube d'enroulement du store selon la figure 1, dans trois positions distinctes, ne modifiant pas la rotation du tube.

Comme indiqué précédemment, l'invention concerne un store à enrouleur, assurant dans de bonnes conditions de rotation, même lorsque les deux paliers de maintien du tube d'enroulement ne sont pas parfaitement coaxiaux. Ce résultat est obtenu en prévoyant que l'un au moins des bouchons d'extrémité du tube d'enroulement puissent ne pas être tout à fait coaxial avec le tube d'enroulement, tout en conservant, bien sûr, une bonne qualité de solidarisation au tube.

Cela peut notamment être obtenu en prévoyant que la partie du bouchon pénétrant dans le tube ne soit pas, comme cela est le cas classiquement, de section cylindrique, mais qu'elle présente au contraire une portion d'extrémité sphérique ou ovoïde.

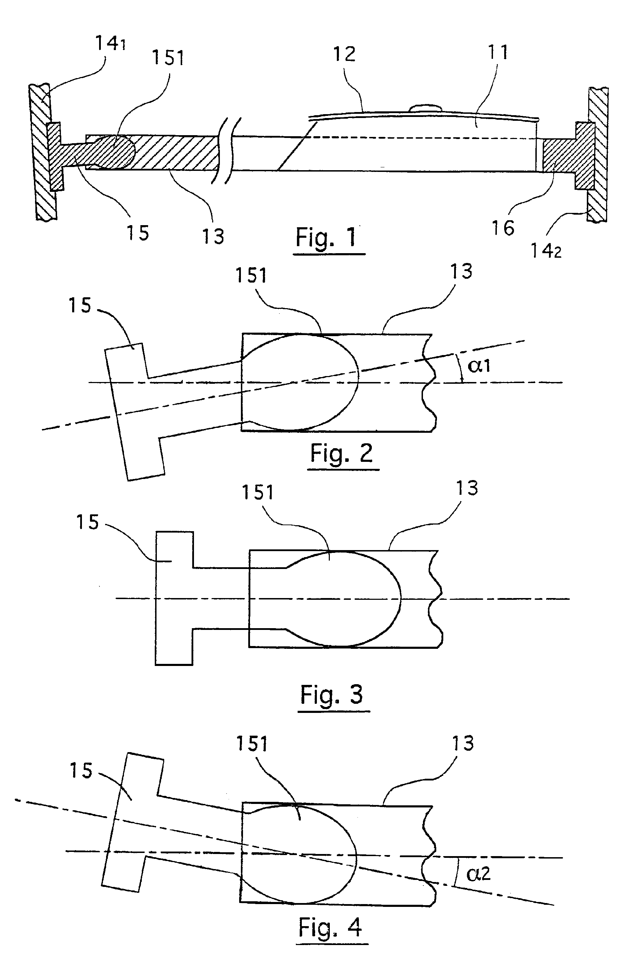

Un exemple d'un tel store à enrouleur est illustré par la figure 1.

Le store à enrouleur illustré sur cette figure est prévu pour obturer intégralement, ou quasi-intégralement, la vitre d'une portière d'un véhicule automobile. Le rideau 11 est donc taillé selon une forme trapézoïdale, coïncidant avec la forme de la vitre. Le bord libre de ce rideau est équipé d'une barre de tirage 12, légèrement galbée pour s'adapter à la partie supérieure de la portière.

Le tube d'enroulement 13 est monté sur les deux paliers 14₁ et 14₂, par l'intermédiaire des bouchons 15 et 16.

Ainsi qu'on l'a déjà mentionné, on conçoit qu'il n'est pas toujours aisé de maintenir les paliers 14₁ et 14₂ parfaitement coaxiaux, notamment lorsque ceux-ci sont montés directement sur la portière (ou un élément de structure du véhicule), et cela d'autant plus que le tube 13 est de longueur importante.

Au lieu de chercher à maintenir, ou à obtenir, cette coaxialité parfaite, qui paraissait nécessaire au bon fonctionnement du store, l'invention apporte une solution nouvelle, à partir d'une reformulation du problème. En effet, le bouchon 15 est conçu de façon que son axe (correspondante à l'axe du palier sur lequel il est monté) ne soit pas coaxial à celui du tube d'enroulement 13, sans perturber la rotation de ce dernier.

En effet, la forme ovoïde (ou en "olive") de la partie 151 pénétrant à l'intérieur du tube 13 permet de tolérer un certain jeu de la position du palier, sans introduire de frottement spécifique, ni nuire au maintien et au guidage en rotation du tube.

Cela apparaît clairement sur les vues agrandies des figures 2 à 4, sur lesquelles on constate que l'angle entre l'axe du bouchon et l'axe du tube peut varier (dans une certaine limite, les angles α₁ et α₂ étant bien sûr exagérés pour faciliter la compréhension du principe de l'invention), ce qui n'était en aucun cas possible selon l'art antérieur.

Un seul desdits bouchons d'extrémité 15 est conçu de façon à autoriser un léger jeu. L'autre bouchon 16 est classique. On peut également prévoir que les deux bouchons permettent un tel jeu. Lorsqu'il n'y a qu'un seul bouchon selon l'invention, il s'agit avantageusement de celui monté du côté dudit tube opposé au mécanisme permettant l'enroulement dudit rideau (moyens de rappel ou motorisation).

Divers modes de réalisation de la partie pénétrante 151 peuvent être envisagés, telle qu'une sphère, ou seulement une portion de sphère ou d'ovoïde, dès lors que le diamètre maximal de cette structure coïncide avec le diamètre intérieur du tube, de façon à maintenir et guider parfaitement ce dernier.

Les éléments fixes du store, portant les paliers, peuvent faire partie d'un boîtier de store classique, ou être monté dans la garniture intérieure d'une portière. Selon un mode de réalisation particulier, le store est monté dans un boîtier conçu de façon qu'il présente des éléments extérieurs visibles, et prévus pour venir en lieu et place d'une partie supérieure du panneau intérieur d'un élément de carrosserie, cette partie supérieure ayant été préalablement supprimée. Un tel store à enrouleur est décrit plus en détail dans la demande de brevet FR-98 12059, ayant pour titre "store à enrouleur à boîtier formant partie supérieure d'une portière, portière et procédé de mise en place correspondants", au nom du titulaire de la présente demande.

## Revendications

1. Store à enrouleur du type comprenant un rideau rétractable (11) dont l'un des bords est solidarisé à un tube d'enroulement rigide (13) monté à rotation sur des moyens fixes, ledit tube d'enroulement (13) étant relié auxdits moyens fixes par l'intermédiaire de deux bouchons d'extrémité (15, 16), présentant chacun une partie pénétrante à l'intérieur dudit tube (13) et une partie de solidarisation à un palier (14₁, 14₂) monté sur lesdits moyens fixes,
caractérisé en ce que ladite partie (151) pénétrant à l'intérieur du tube (13) d'au moins un desdits bouchons d'extrémité (15) est conçue de façon à autoriser l'existence d'un angle (α₁, α₂) éventuellement non nul entre l'axe dudit bouchon (15) et l'axe dudit tube d'enroulement (13), sans nuire à la rotation de ce dernier.

2. Store à enrouleur selon la revendication 1, caractérisé en ce que ladite partie (151) pénétrant à l'intérieur du tube présente une portion au moins partiellement sphérique ou ovoïde, dont le diamètre maximum coïncide avec le diamètre intérieur dudit tube d'enroulement (13).

3. Store à enrouleur selon l'une quelconque des revendications 1 et 2, caractérisé en ce qu'un seul desdits bouchons d'extrémité (15) est conçu de façon à autoriser l'existence d'un angle éventuellement non nul entre l'axe dudit bouchon (15) et l'axe dudit tube d'enroulement (13).

4. Store à enrouleur selon la revendication 3, caractérisé en ce que ledit bouchon d'extrémité (15) conçu de façon à autoriser l'existence d'un angle éventuellement non nul entre l'axe dudit bouchon et l'axe dudit tube d'enroulement est monté du côté dudit tube opposé au mécanisme permettant l'enroulement dudit rideau (11).

5. Store à enrouleur selon l'une quelconque des revendications 1 à 4, caractérisé en ce que lesdits moyens fixes sont solidaires de la carrosserie d'un véhicule.

6. Store à enrouleur selon l'une quelconque des revendications 1 à 4, caractérisé en ce qu'il est monté dans un boîtier fixe prévu pour être solidarisé à la carrosserie ou à une vitre d'un véhicule.

7. Store à enrouleur selon la revendication 6, caractérisé en ce que ledit boîtier présente des éléments extérieurs visibles prévus pour venir en lieu et place d'une partie supérieure du panneau intérieur d'un élément de carrosserie d'un véhicule.
